# EUROPEAN PATENT SPECIFICATION

(11) **EP 0 989 013 B1**
(45) Date of publication and mention of the grant of the patent: **02.01.2004**
(21) Application number: 99118243.7
(22) Date of filing: 14.09.1999
(51) Int. Cl.: B60K 41/02

(54) **Power plant system**
Triebkraftsystem
Système d'une source d'entraînement

(30) Priority: 24.09.1998 JP 26964898
(43) Date of publication of application: 29.03.2000
(73) Proprietor: TOYOTA JIDOSHA KABUSHIKI KAISHA, Aichi-ken 471-8571 (JP)
(72) Inventor: Mizutani, Koichi, c/o Toyota Jidosha K. K., Toyota-shi, Aichi-ken 471-8571 (JP); Maeda, Yasuhiro, c/o Toyota Jidosha K. K., Toyota-shi, Aichi-ken 471-8571 (JP)
(74) Representative: Leson, Thomas Johannes Alois, Dipl.-Ing.

(56) References cited:
- EP-A- 0 314 409
- EP-A- 0 779 200
- US-A- 5 460 581
- US-A- 5 609 548

## Description

### BACKGROUND OF THE INVENTION

### 1. Field of the Invention

The present invention relates to a power plant system in accordance with the preamble of claim 1.

### 2. Description of Related Art

Clutches which connect/disconnect power from a power source to/from an output shaft disposed downstream of the power source are known see for exemple EP-A-314 409 which discloses a power plant system of the above type.

At present, a reciprocating piston engine, which is the most common power source for a vehicle etc., is used in combination with a transmission mechanism, a clutch or the like, because such an engine has a limited operable revolution speed and, in particular, generates no torque when stalled. In the case of a manual transmission for a vehicle etc., a friction clutch having a simple structure is typically used. The friction clutch is so constructed as to be released when a vehicle is not moving, while the revolution of the engine is maintained. When the vehicle is to start, a shaft of the friction clutch located at the output is gradually engaged so as to gradually increase the speed. This state is generally called a "half clutch" state. During a gear change operation, the clutch is also operated so as not to transmit an engine output to the wheels. This engage/release operation of the friction clutch is usually performed by a clutch pedal which the operator operates by his/her foot. Therefore, when starting a vehicle, the operator must operate an accelerator pedal with one foot while operating the clutch pedal with the other foot. In addition, when starting a vehicle on a hill, for example, the operator also has to operate a brake lever with his/her hand.

A manual transmission using a friction clutch, although of simple structure, imposes a significant burden on the operator as described above. An automatic transmission having a torque converter and a fluid coupling may be a solution of the above problem, but such a transmission is heavy and has a complicated structure and many operators feel deprived of the pleasure of driving a vehicle. An automatic clutch device which may be intermediate to an manual and automatic transmission is also known. Such an automatic clutch device, like an automatic transmission, does not require pedal operation by the operator to engage and release the clutch, but has a simpler structure. Automatic clutch devices using a centrifugal clutch and those using an electromagnetic clutch such as a magnetic powder clutch have been put into practice. Recently, another device has been put into practice in which a hydraulic actuator replaces the role of the operator' foot in the conventional manual transmission. This mechanism, in which a hydraulic pump, a hydraulic cylinder, and a valve mechanism for controlling the fluid flow are further provided in a conventional manual transmission mechanism, has an advantage that it can be produced relatively easily.

The aforementioned automatic clutch device having a hydraulic actuator can be combined with a typical manual transmission. In this case, as in the conventional manner, shifting operation is directly performed by an operator's manipulation of a shift lever connected via a link with a shift fork of the manual transmission. The aforementioned automatic clutch device can also be combined with a type of transmission device in which a shift fork is actuated by a hydraulic actuator, not via a link as in the foregoing case. The actuator is configured to operate based on a shift command signal issued from the operator or a shift command determined and provided by a control unit according to driving situation of the vehicle.

Heretofore, in such an automatic clutch device using a hydraulic actuator, the clutch is controlled to engage when a control device for controlling the clutching operation becomes abnormal. With such control, if an abnormality occurs while a vehicle is running, an engine stall is caused when the vehicle subsequently stops and the vehicle is prohibited from moving afterwards. On the other hand, if it occurs while the vehicle is not running and the engine is working, the engine stall is caused immediately to prohibit the vehicle from moving. In either case, as the vehicle and the engine are caused to stop, the vehicle is prevented from running while its automatic clutch device is abnormal.

As described above, in the conventional automatic clutch device, the clutch is controlled to maintain its engaged state when the control device thereof becomes abnormal. This causes a shock at the time of an engine stall and causes persons in the vehicle to feel uncomfortable.

### SUMMARY OF THE INVENTION

The present invention is made to overcome the aforementioned problem and its object is to suppress shock generated when a control device for controlling the automatic clutch device becomes abnormal.

In order to solve the foregoing problem, in accordance with the present invention, there is provided a power plant system in accordance with claim 1.

According to the present invention, it is possible to suppress a shock generated at the time of an engine stall by reducing an output of the power source or causing the power source to stop.

### BRIEF DESCRIPTION OF THE DRAWINGS

These and other objects of the invention will be explained in the description below, in connection with the accompanying drawings, in which:
FIG. 1 schematically shows a structure of a power plant having an automatic clutch device according to an embodiment of the present invention;
FIG. 2 schematically shows the structure of a clutch;
FIG. 3 shows a circuit of a fluid pressure system in the automatic clutch device;
FIG. 4 is a flowchart concerning abnormality decision of the automatic clutch device and controls performed when the automatic clutch device is abnormal; and
FIG. 5 is a flowchart concerning controls for an automatic clutch, in particular clutch controls when abnormality occurs in a stroke sensor.

### DETAILED DESCRIPTION OF THE PREFERRED EMBODIMENT

A preferred embodiment of the present invention will be described in further detail with reference to the accompanying drawings.

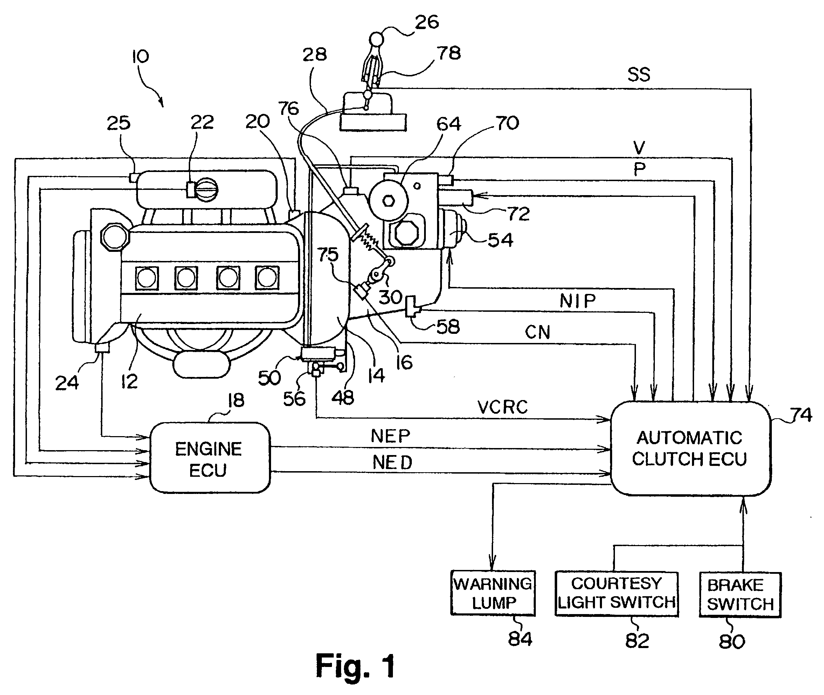

Fig. 1 schematically shows the structure of a power plant comprising an automatic clutch device. A power plant 10 comprises an engine 12, a clutch 14, and a transmission 16. The engine 12 is of a type now commonly used and is controlled by determining a fuel injection amount and so on based on information from various sensors which detect the operation state of the engine. An engine ECU (engine electronic control unit) 18 controls the engine, and signals from a temperature sensor 20 for detecting the temperature of a coolant, a throttle sensor 22 for detecting the degree of opening of a throttle valve, an engine revolution speed sensor 24 for detecting the revolution speed of the engine, and signals from an intake manifold pressure sensor 25 for detecting the pressure within the intake manifold are input to this engine ECU. The engine revolution speed sensor 24 includes a gear secured to a crankshaft and an electromagnetic pickup which detects teeth of the gear, and outputs a high-level signal when a tooth part of the gear opposes to the sensor whereas it outputs a low-level signal when a gap part of the gear opposes the sensor. In this manner, the engine revolution speed sensor 24 outputs a square wave of a frequency in accordance with the engine speed. The engine ECU 18 calculates the revolution speed of the engine from the frequency of the square wave to thereby control the engine accordingly.

A synchromesh manual transmission device is used as a transmission device 16, and the selection of gear is performed by a shift lever 26 operated by the operator, as in ordinary manual transmission devices. Specifically, the operation of the shift lever 26 is transmitted via a shift wire 28 to a shift arm 30 which then operates a shift fork and a sleeve in the transmission device 16 to select the gear.

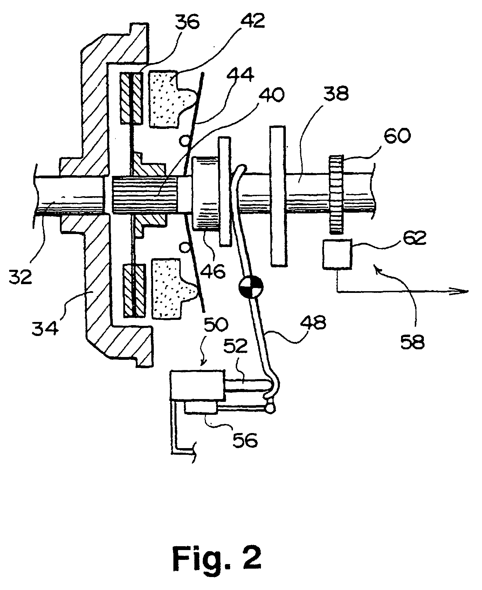

Fig. 2 illustrates the structure of the clutch 14, which is basically similar to a conventional clutch. A crank shaft 32 of the engine is coupled a fly wheel 34 having, at the right side in this drawing, a friction surface in contact with a friction disc 36. The friction disc is disposed at the end of an input shaft 38 which is a shaft at the output of the clutch 14 and a shaft at the input of the transmission device 16 at the same time. The input shaft 38 has at its end portion a spline 40 with which another spline provided to the friction disc 36 is mated. Accordingly, the movement of the friction disc 36 is regulated in the rotation direction of the input shaft 38 such that it only rotates with the shaft 38, while the friction disc 36 is slidable in the axial direction. A pressure plate 42 is arranged opposing the friction disc 36, and a diaphragm spring 44 is further provided so as to contact the rear surface of the pressure plate 42. When the clutch is engaged, the pressure plate 42 is forced by the diaphragm spring 44 to cause the friction disc 36 to be pressed against the fly wheel 34, thereby transmitting the output of the engine 12 to the input shaft 38.

A release bearing 46 is disposed on the input shaft 38 at a position in contact with the inner diameter of the diaphragm spring 44, and slides on the input shaft 38 by a rocking movement of a release fork 48. The release fork 48 makes contact with a rod 52 of a release cylinder 50 at an end opposite to the end contacting with the release bearing 46. Fluid is supplied via a hydraulic line from the hydraulic pump 54 (see Fig. 1) to the release cylinder 50 to move the rod 52 forward and backward. This hydraulic system will be described later in further detail. The amount of movement of the rod 52, namely the stroke extent of the clutch 14, is detected by a stroke sensor 56 secured to the release cylinder 50. The stroke sensor 56, which is a sliding resistor type sensor in this embodiment, outputs a voltage in accordance with the movement of the rod 52.

The input shaft 38 is provided with an input shaft speed sensor 58 to detect the revolution speed thereof. The input shaft speed sensor 58 includes a gear 60 secured onto the input shaft 38 and an electromagnetic pickup 62 for detecting the teeth of the gear 69, and outputs a square wave of a frequency in accordance with the revolution speed.

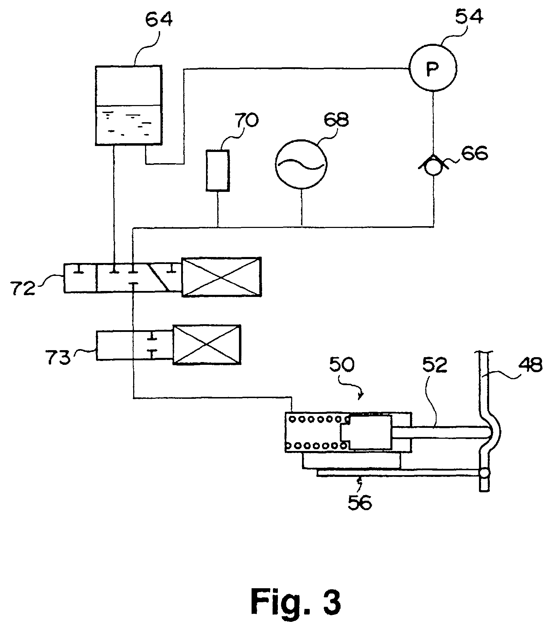

Fig. 3 shows a circuit of the hydraulic system for operating the clutch 14. As the working fluid, an incompressible liquid having a relatively high viscosity is preferable. Typical brake fluid is used in this embodiment. The hydraulic pump 54 is operated to feed the fluid stored in a reservoir 64 via a check valve 66 to an accumulator 68, where a high pressure fluid is stored. The pressure inside the accumulator 68 is detected by a pressure switch 70. When the detected pressure is under a predetermined value, the hydraulic pump 54 is operated to increase the pressure until it reaches the predetermined value, when the hydraulic pump 54 is stopped. Under the control of a solenoid valve 72, the fluid stored within the accumulator 68 is supplied to the release cylinder 50 to cause a rod 52 to advance, thereby pressing the release fork 48. When causing the rod 52 to retreat, on the other hand, the fluid existing within the release cylinder 50 is supplied back to the reservoir 64 under the control of the solenoid valve 72. Between the solenoid valve 72 and the release cylinder 50, a holding valve 73 is provided for maintaining the pressure inside the release cylinder 50. The holding valve 73, which is normally in a communicating state, is placed in a disconnection state under the given condition described later. In the disconnection state of the holding valve 73, the fluid within the release cylinder 50 can not let out, so that the stroke of the clutch is held.

The solenoid valve 72 is controlled by an automatic clutch ECU (automatic clutch electronic control unit) 74, to which an engine revolution pulse NEP and an engine revolution speed NED from the engine ECU 18 are input. A stroke extent VCRC of the release fork 48 detected from the stroke sensor 56, an output pulse NIP from the input shaft speed sensor 58, an output P from a pressure switch 70, an output CN from a neutral switch 75 which detects that the transmission device is in a neutral state, an output SS from a shift lever switch 78 which detects the operation of the shift lever, and an output V form a speed sensor 76 which detects the speed of the vehicle are also input to the automatic clutch ECU 74. Further, outputs from a brake switch 80 which detects whether or not the brake is being operated and from a courtesy light switch 82 are input to the automatic clutch ECU 74.

In response to the input signals mentioned above, the automatic clutch ECU 74 controls the solenoid valve 72 and the hydraulic pump 54 so as to control the automatic clutch device. When the system becomes abnormal, the automatic clutch ECU 74 switches on a warning lamp to draw attention of the operator.

The operation of the automatic clutch device will be now outlined. When the engine is to be started, the ignition switch is turned to the on-position, that is before the engine start position, the fluid is supplied to the release cylinder 50 and the clutch is released. After the engine is started, it is confirmed that the vehicle is stopped and that the transmission device 16 is in a neutral state and then the clutch starts to be engaged. As the clutch is being gradually engaged, it reaches a clutch engage starting point at which the input shaft 38 starts revolting. The output value of the stroke sensor 56 at this point is stored. Next, the clutch is placed back to the release state. When the gear selection is made by the shift lever 26 and the revolution of the engine increases, the clutch begins to engage again. At this time, it is possible to quickly place the clutch to the engage starting point which was already determined when the engine was started. Subsequently, the solenoid valve 72 is controlled using the revolution speed of the engine 12 and of the input shaft 38 as a reference to further control the amount of the working fluid to be supplied to the release cylinder 50. Thus, the stroke extent of the clutch can be adjusted finely so as to allow a smooth operation of the clutch.

At the time of gear change operation, when the shift lever 26 starts to be operated while the vehicle is running, the solenoid valve 72 is controlled such that the fluid is supplied to the release cylinder 50, thereby operating the clutch to be released. When the gear selection is completed by the operation of the shift lever 26, the solenoid valve 72 is controlled such that the fluid is discharged from the release cylinder 50 thereby allowing the clutch to be engaged again. In this case, again, a smooth engaging operation is performed under the control of the solenoid valve 72 using the speed of the engine 12 and of the input shaft 38 as a reference.

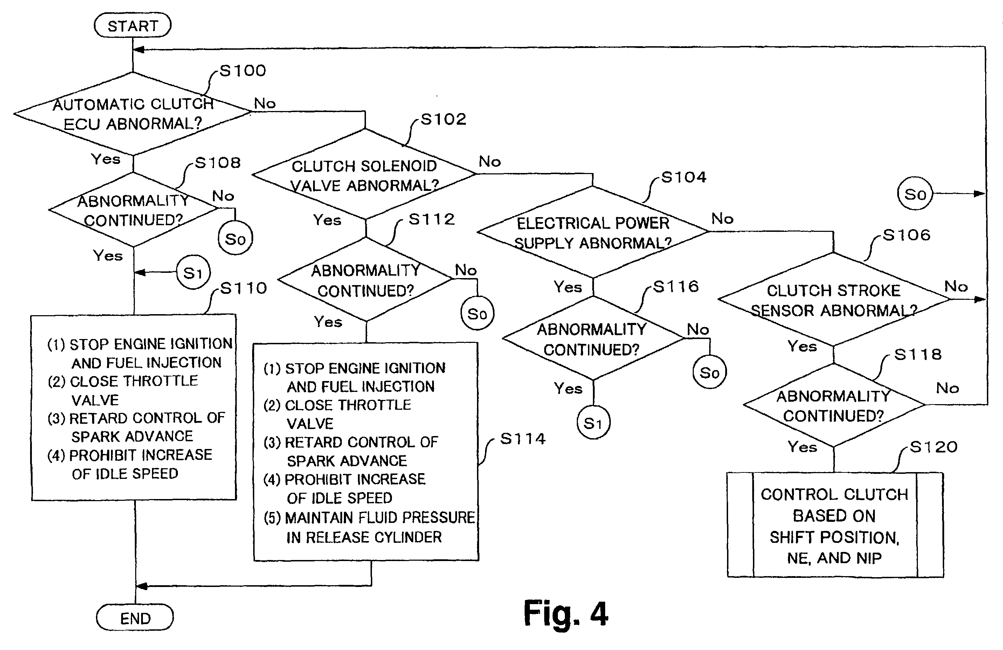

Fig. 4 is a flowchart concerning operation of the abnormality detection in the automatic clutch device and the control thereof when the abnormality is detected. As an abnormality in the automatic clutch device, abnormalities in the automatic clutch ECU 74 (S100), in solenoid valve 72 of the clutch (S102), in the electrical power supply system of the automatic clutch ECU (S104), and in the stroke sensor 56 (S106) are sequentially determined.

At step S100, it is determined, in the engine ECU 18, whether or not the automatic clutch ECU 74 is abnormal. If the abnormality is detected and has continued for a given time period (S108), it is determined that an abnormality actually occurs and fail safe control (S110) is performed. In the fail safe control of S110, an engine output is reduced or the engine is caused to stop. The engine stop control can be performed by stopping generation of an ignition signal to cause the engine to misfire, or by stopping generation of a fuel injection signal to stop the fuel supply to the engine. It is possible to stop the engine by either one of the foregoing processes, but of these the process of interrupting a fuel injection signal is preferred, because this can prevent the injected fuel from being emitted uncombusted. Of course, the aforementioned two processes can be performed simultaneously or successively.

The control of an engine output reduction can be performed by closing the throttle valve, by a retard control of spark advance, and by prohibiting the increase of idle speed. If the throttle valve is closed, the engine is placed to an idling state in which an engine output is the lowest. Under the retard control of spark advance, the value of the highest combustion pressure is lowered to thereby reduce the engine output. Further, the idle speed may be controlled to a higher value depending on the operation state and the coolant temperature of the air conditioner or alternator, and such control can be prohibited. The aforementioned processes may be performed independently, or two or more of these processes may be performed in combination.

For the engine stop control and the engine output reduction control in step 110, it is possible to select among the aforementioned processes in accordance with the drive condition of the vehicle. For example, if an abnormality is detected while the vehicle is running, any of the aforementioned processes for reducing the engine output may be first performed alone or in combination, and then the engine stop control may be performed. It is also preferable to control the engine output such that a rapid decrease of the output is avoided. Such control is possible by gradually decreasing the throttle valve opening.

At step S102, it is determined, in the automatic clutch ECU 74, whether or not the solenoid valve 72 is abnormal. If the abnormality is detected and has continued for a given time period (S112), it is determined that an abnormality actually occurs and fail safe control (S114) is performed.

In step S114, the process for holding the fluid pressure in the release cylinder is further added to the aforementioned processes of step S110. When the solenoid valve 72 is abnormal, it is not switched correctly, and this causes the fluid within the release cylinder 50 to be discharged more than necessary, or the fluid to be supplied to the release cylinder 50 more than necessary. Therefore, the holding valve 73 is closed to control the fluid pressure within the release cylinder 50 such that it is held at the current level. This control is performed in the automatic clutch ECU 74. With respect to the remaining processes for the engine stop and the engine output reduction, any one of or any combination of these can be performed as in the step S110. Further, selection of these processes may be made in accordance with the drive condition of the vehicle. Also, as in the step S110, the aforementioned processes may be performed with a time difference.

At step S104, it is determined whether or not the power supply to the automatic clutch ECU 74 is ensured. While the engine is working, an electrical power is supplied to the automatic clutch ECU 74 via the ignition key switch similarly to other engine accessories. Also, if, before the engine is started, the courtesy light switch 82 is on, that is, the door is opened, electrical power is directly supplied to the automatic clutch ECU 74 from the battery similarly to the room lamp. It is also determined in the engine ECU 18 if the ground is correctly connected. If abnormality is found in at least one of the aforementioned decisions and this abnormal state has continued for a given time period (S116), it is determined that an abnormality actually occurs and fail safe control (S110) is performed.

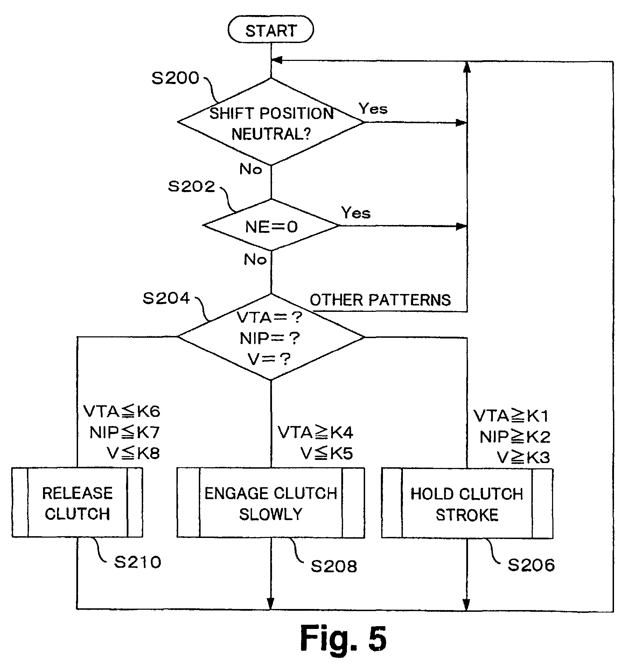

At step S106, the abnormality of the stroke sensor 56 itself which detects the clutch stroke, namely the moving extent of the release cylinder 50 is determined. The abnormality is determined in the automatic clutch ECU 74 when the sensor output is rapidly changed, or reaches the upper or lower limit. If the abnormality is detected and has continued for a given period (S118), it is determined that the abnormality actually occurs, and fail safe control (S120) is performed. If the abnormality is only in the stroke sensor 56, engagement/release of the clutch is actually possible, and the vehicle may run depending on the way of control. Accordingly, the fail safe control (S120) at this time intends to keep the vehicle running, the specific processes of which are shown in Fig. 5.

Fig. 5 is a flowchart showing the specific controls of the step S120 of Fig. 4. First, it is determined if the shift position is neutral (S200). It is further determined if the engine speed is 0 (S202). If the results are "NO" in both steps, it is determined that the operator intends to cause the vehicle to run. Next, the opening of the throttle valve VTA, the speed of the input shaft NIP and the speed of the vehicle V are found to select the controls accordingly (S204). If the throttle valve opening VTA is over the predetermined value K1, the speed of the input shaft is over the predetermined value K2, and the speed of the vehicle V is over the predetermined value K3, it is determined that the vehicle is now running, and the clutch stroke is controlled at the current position (S206). If VTA is over the predetermined value K4 and V is below the predetermined value K5, it is determined that the operator is now operating the vehicle to start, and the clutch is slowly shifted to an engaged state (S208). Since the output from the stroke sensor 56 cannot be obtained, the connection start point of the clutch is now known. Therefore, the clutch should be slowly moved from the initial position. If VTA is under the predetermined value K6, NIP is under the predetermined value K7, and V is under the predetermined value K8, there is a possibility of an engine stall and therefore the clutch is released (S210). In the cases other than the aforementioned steps S206 to S210, the current state is held and the process returns to the step S200.

As described above, in the embodiment of the present invention, an abnormality is detected and determined either by the engine ECU 18 or the clutch ECU 74, which thus function as abnormality detecting means by working in accordance with the predetermined program. When the abnormality is detected, the engine ECU 18 controls the engine to reduce its output or cause it to stop. Thus, the engine ECU 18 functions as output control means.

As described, in the present invention, when an abnormality occurs in the automatic clutch device, the clutch can be engaged while the engine is caused to stop or its output is reduced. Such an engaging control of the clutch is based on the concept that it is safer when the vehicle is not being operated (when parked, etc.). In case of the conventional manual transmission, the clutch is engaged while the operator is away from the operator's seat. Also, when parked on a hill, for example, the vehicle may be parked while the gear is engaged such that the engine brake can operate. In order to realize the same condition in the automatic clutch device, it is necessary to engage the clutch when the device is halted. However, if such clutch engage control is performed while the engine is revolving, only because the abnormality is found in the device, a shock is generated when the clutch is engaged, thereby causing the passengers to feel uncomfortable. According to the present embodiment, however, generation of a shock can be reduced even if abnormality is found and the clutch is engaged, because the engine is cause to stop or its output is reduced.

In the foregoing embodiment, an electrical power is directly supplied to the engine ECU 18. However, it is also possible to supply an electrical power to the engine ECU 18 via the automatic clutch ECU 74 and to block this power supply from the automatic clutch ECU 74 to the engine ECU 18 when an abnormality occurs in the automatic clutch ECU 74. This control has an effect equivalent to that of the engine ignition stop and the fuel injection stop in the step S114 of Fig. 4.

The foregoing embodiment is also applicable to the system in which the gear selection is made by an actuator using a fluid pressure. In this case, it is possible to reduce shock generated when the vehicle stops by controlling the transmission device in a neutral state in the step S114 of Fig. 4.

While the preferred embodiment of the present invention has been described using specific terms, such description is for illustrative purposes only, and it is to be understood that changes and variations may be made without departing from the spirit or scope of the appended claims.

An engine ECU or an automatic clutch ECU detects an abnormality of an automatic clutch device (S100, S102, S104, S106). A predetermined fail safe control is performed in accordance with the content of the detected abnormality (S110, S114, S120). In particular, when an abnormality is detected in the automatic clutch ECU (S100), a clutch solenoid valve (S102), or a supply source system for the automatic clutch ECU (S104), control for reducing an engine output or for causing the engine to stop is performed. Thus, a shock generated at the time of an engine stall etc. can be suppressed.

## Claims

1. **A power plant system**
comprising
- a power source (12) and
- an automatic clutch device (14) that connects/disconnects an output from the power source (12) to/from
- an output shaft disposed downstream of the power source (12) and further comprising
- a power plant control system comprising
- a power source output control means (18) for either reducing the output of said power source (12) or causing said power source to stop
**characterised in that**
- the power plant control system further comprises
- a clutch abnormality detecting means (74) for detecting an abnormality of said automatic clutch device (14) and **in that**
- the power source output control means (18) either reduces the output of said power source (12) or causes it to stop when an abnormality of said automatic clutch device (14) is detected.

2. The power plant system according to claim 1, wherein said output control means temporarily reduces the output of said power source and subsequently causes said power source to stop when an abnormality is detected.

3. The power plant system according to claim 1 or 2, wherein said abnormality detecting means (74) detects an abnormality of an electronic control unit of the automatic clutch device.

4. The power plant system according to any of claims 1 to 3, wherein said automatic clutch device generates a clutch stroke using a hydraulic cylinder and said abnormality detecting means detects an abnormality of a solenoid valve which controls fluid supply to said hydraulic cylinder.

5. The power plant system according to claim 3 or 4, wherein said abnormality detecting means detects an abnormality of an electrical power supply which supplies an electrical power to at least either one of said electronic control unit or said solenoid valve.

6. The power plant system according to any of claims 1 to 5, wherein said power source is an internal combustion engine and said output control means reduces the output by closing a throttle valve.

7. The power plant system according to any of claims 1 to 5, wherein said power source is an internal combustion engine and said output control means reduces the output by retard control of spark advance.

8. The power plant system according to any of claims 1 to 5, wherein said power source is an internal combustion engine and said output control means causes said power source to stop by stopping generation of an ignition signal.

9. The power plant system according to any of claims 1 to 5, wherein said power source is an internal combustion engine and said output control means causes said power source to stop by interrupting fuel supply thereto.

10. The power plant system according to any of claims 1 to 9, wherein said power plant is mounted in a vehicle to drive the vehicle.

## Patentansprüche

1. Triebkraftsystem mit:
einer Kraftquelle (12), und
einer automatischen Kupplungsvorrichtung (14), die eine Ausgabe von der Kraftquelle (12) mit einer stromabwärts der Kraftquelle (12) angeordneten Ausgabewelle verbindet oder davon löst, und die ferner folgendes aufweist:
ein Triebkraftsteuerungssystem mit:
einer Kraftquellenausgabesteuerungseinrichtung (18), um entweder die Ausgabe der Kraftquelle (12) zu verringern oder die Kraftquelle dazu zu veranlassen, anzuhalten,
**dadurch gekennzeichnet, dass**
das Triebkraftsteuerungssystem ferner folgendes aufweist:
eine Kupplungsstörungserfassungseinrichtung (74) zum Erfassen einer Störung der automatischen Kupplungsvorrichtung (14) und dass
die Kraftquellenausgabesteuerungseinrichtung (18) entweder die Ausgabe der Kraftquelle (12) verringert oder diese veranlasst, anzuhalten, wenn eine Störung der automatischen Kupplungsvorrichtung (14) erfasst wird.

2. Triebkraftsystem gemäß Anspruch 1, wobei die Ausgabesteuerungseinrichtung die Ausgabe der Kraftquelle zeitweise verringert und darauffolgend die Kraftquelle dazu veranlasst, zu stoppen, wenn eine Störung erfasst ist.

3. Triebkraftsystem gemäß Anspruch 1 oder 2, wobei die Störungserfassungseinrichtung (74) eine Störung einer elektronischen Steuerungseinheit der automatischen Kupplungsvorrichtung erfasst.

4. Triebkraftsystem gemäß einem der Ansprüche 1 bis 3, wobei die automatische Kupplungsvorrichtung einen Kupplungshub unter Verwendung eines Hydraulikzylinders erzeugt und die Störungserfassungseinrichtung eine Störung eines Solenoidventils erfasst, welches die Fluidzufuhr zu dem Hydraulikzylinder steuert.

5. Triebkraftsystem gemäß Anspruch 3 oder 4, wobei die Störungserfassungseinrichtung eine Störung einer elektrischen Energiezufuhr erfasst, die eine elektrische Energie zu zumindest entweder einem aus der elektrischen Steuerungseinheit oder dem Solenoidventil zuführt.

6. Triebkraftsystem gemäß einem der Ansprüche 1 bis 5, wobei die Kraftquelle eine Brennkraftmaschine ist und die Ausgabesteuerungseinrichtung die Ausgabe durch Schließen eines Drosselventils verringert.

7. Triebkraftsystem gemäß einem der Ansprüche 1 bis 5, wobei die Kraftquelle eine Brennkraftmaschine ist und die Ausgabesteuerungseinrichtung die Ausgabe durch Verzögerungssteuerung des Zündfortschritts verringert.

8. Triebkraftsystem gemäß einem der Ansprüche 1 bis 5, wobei die Kraftquelle eine Brennkraftmaschine ist und die Ausgabesteuerungseinrichtung die Kraftquelle dazu veranlasst, zu stoppen, indem die Erzeugung eines Zündsignals gestoppt wird.

9. Triebkraftsystem gemäß einem der Ansprüche 1 bis 5, wobei die Kraftquelle eine Brennkraftmaschine ist und die Ausgabesteuerungseinrichtung die Kraftquelle dazu veranlasst, zu stoppen, indem die Kraftstoffzufuhr dazu unterbrochen wird.

10. Triebkraftsystem gemäß einem der Ansprüche 1 bis 9, wobei die Triebkraftanlage an einem Kraftfahrzeug zum Antreiben des Kraftfahrzeugs montiert ist.

## Revendications

1. Système de source d'entraînement
comprenant
- une source d'alimentation (12) et
- un système d'embrayage automatique (14) qui transmet ou non un rendement généré par la source d'alimentation (12) à/depuis
- un arbre de sortie disposé en aval de la source d'alimentation (12)
et comprenant en outre
- un système de commande du groupe motorisé comprenant
- un moyen de commande du rendement de la source d'alimentation (18), permettant de réduire le rendement de ladite source d'alimentation (12) ou de provoquer l'arrêt de ladite source d'alimentation
**caractérisé en ce que**
- le système de source d'entraînement comprend en outre
- un moyen de détection des anormalités de l'embrayage (74) permettant de détecter une anormalité dudit système d'embrayage automatique (14) et **en ce que**
- le moyen de commande du rendement de la source d'alimentation (18) réduit le rendement de ladite source d'alimentation (12) ou provoque son arrêt lorsqu'une anormalité dudit système d'embrayage automatique (14) est détectée.

2. Système de source d'entraînement selon la revendication 1, dans lequel ledit moyen de commande du rendement réduit temporairement le rendement de ladite source d'alimentation et provoque par la suite l'arrêt de ladite source d'alimentation lorsqu'une anormalité est détectée.

3. Système de source d'entraînement selon la revendication 1 ou 2, dans lequel ledit moyen de détection des anormalités (74) détecte une anormalité d'un bloc de commande électronique du système d'embrayage automatique.

4. Système de source d'entraînement selon l'une quelconque des revendications 1 à 3, dans lequel ledit système d'embrayage automatique génère une course d'embrayage à l'aide d'un cylindre hydraulique et dans lequel ledit moyen de détection des anormalités détecte une anormalité d'une électrovanne qui commande l'alimentation en liquide dudit cylindre hydraulique.

5. Système de source d'entraînement selon la revendication 3 ou 4, dans lequel ledit moyen de détection des anormalités détecte une anormalité d'une alimentation électrique qui fournit de l'électricité à au moins l'un dudit bloc de commande électronique ou de ladite électrovanne.

6. Système de source d'entraînement selon l'une quelconque des revendications 1 à 5, dans lequel ladite source d'alimentation est un moteur à combustion interne et dans lequel ledit moyen de commande du rendement réduit le rendement en fermant un papillon des gaz.

7. Système de source d'entraînement selon l'une quelconque des revendications 1 à 5, dans lequel ladite source d'alimentation est un moteur à combustion interne et dans lequel ledit moyen de commande du rendement réduit le rendement en exécutant une commande retardée de l'avance à l'allumage.

8. Système de source d'entraînement selon l'une quelconque des revendications 1 à 5, dans lequel ladite source d'alimentation est un moteur à combustion interne et dans lequel ledit moyen de commande du rendement provoque l'arrêt de ladite source d'alimentation en interrompant la génération d'un signal d'allumage.

9. Système de source d'entraînement selon l'une quelconque des revendications 1 à 5, dans lequel ladite source d'alimentation est un moteur à combustion interne et dans lequel ledit moyen de commande du rendement provoque l'arrêt de ladite source d'alimentation en interrompant l'alimentation en carburant vers celle-ci.

10. Système de source d'entraînement selon l'une quelconque des revendications 1 à 9, dans lequel ladite source d'entraînement est montée dans un véhicule afin de permettre la conduite du véhicule.
